# EUROPEAN PATENT SPECIFICATION

(11) **EP 3 082 554 B1**
(45) Date of publication and mention of the grant of the patent: **25.10.2017**
(21) Application number: 13814534.7
(22) Date of filing: 19.12.2013
(51) Int. Cl.: A47L 15/42, A47L 15/48

(54) **DISHWASHER COMPRISING HEAT PUMP SYSTEM**
GESCHIRRSPÜLMASCHINE MIT EINEM WÄRMEPUMPENSYSTEM
LAVE-VAISSELLE COMPRENANT UN SYSTÈME DE POMPE À CHALEUR

(43) Date of publication of application: 26.10.2016
(73) Proprietor: Electrolux Appliances Aktiebolag, 105 45 Stockholm (SE)
(72) Inventor: DREOSSI, Giuseppe, S-10545 Stockholm (SE)
(74) Representative: Electrolux Group Patents
(86) International application number: PCT/EP2013/077396
(87) International publication number: WO 2015/090409

(56) References cited:
- EP-A1- 2 471 434
- EP-A2- 2 449 945
- CN-A- 103 070 656
- DE-A1- 3 214 216
- DE-A1-102011 000 042
- DE-C1- 4 330 456

## Description

### Field of the invention

The present invention relates to dishwasher comprising a heat pump system for use during the dishing and drying phase.

### Background of the invention

Dishwashers are used in domestic kitchens as well as professional kitchens and restaurants for dishing goods such as for example plates, pots, pans etc. Dishwashers comprises a washing chamber in which the dishing goods are packed in one or more baskets to remain in the intended position separated from adjacent items to make it possible for water to circulate within the washing chamber and clean the dishing goods.

Water is circulated in the washing chamber by a pump arranged in the lower section of the washing chamber. The water is lead from the pump via pipes to one, or more, rotating spray arms provided with a number nozzles that are spraying water on the dishing goods to clean the dishing goods.

In order to adapt the dishwashers to new regulations regarding reduced energy consumption some modern dishwashers have been provided with a heat pump system in order to reduce the power consumption required to heat the dishing water. The working principle of heat pump systems are widely known and used within several different technical fields to heat different mediums alternatively used the other way around for refrigerators etc. One example of this type of dishwasher is disclosed in DE102011000042A1.

In a basic heat pump system a working medium is circulated in the system comprising a compressor, a condenser and an evaporator connected with suitable pipes. After having passed the compressor, the working medium is lead to the condenser where heat is transferred to the washing bath before the working medium continues to the evaporator where some kind of material is cooled down. The advantage with the heat pump system is that the energy required to run the compressor is lower than the energy transferred as heat to the water by the condenser, and as a consequence the material on the evaporator side becomes cold, and possibly solid.

After the dishing phase of the dishing program is completed, the air in the washing chamber is hot and with a high amount of water steam. In order to dry the dishing goods in the washing chamber efficiently the amount of water steam in the air must be reduced. The cooled material on the evaporator side could be used to condensate the water steam in the air in the washing chamber in an efficient way and lead the condensated water down into the sump in the lower part of the washing chamber. Unfortunately, the dehumidified air at the same time is cooled down which will affect the drying in a negative way, especially since this the air will be cooled more and more the longer the drying phase is. There is consequently a need for an improved dishwasher heat pump system that is reliable, simple and not suffering from the described drawbacks.

### Summary of the invention

The present invention, defined in the appended claims, relates to a dishwasher that to at least some extent fulfils the need defined above.

The dishwasher according to the invention comprises:
the features of claim 1. The dishwasher defined above have low power consumption during the dishing phase, i.e. the heat pump system running in the first configuration, since the first condenser is arranged to heat the dishing water. The heat pump system, switched to the second configuration, furthermore provides a very efficient drying of the dishing goods both in view of power consumption and the time required to dry the dishing goods since the dehumidifying and heating of the air during the drying phase improves and shortens the time required to achieve the desired dryness. The improved drying characteristics of the dishwasher furthermore makes it possible to eliminate, or at least reduce the temperature in the hot rinse phase that is performed in the end of the dishing phase to heat the dishing goods and speed up the drying of the dishing goods. The eliminated hot rinse phase or the reduced temperature during the hot rinse phase reduces the power consumption of the dishwasher further.

A further advantage with the dishwasher according to the invention is that the dishwasher during the dishing phase will cool ambient air which is very favourable since the dishwasher furthermore act as an air conditioner and reduces the temperature in the kitchen where the dishwasher is arranged. According to the invention, the compressor, the first condenser, the second condenser and the evaporator of the heat pump system are connected by pipes suitable for a working medium circulating in the heat pump system in order to ensure a reliable operation of the system. According to the invention, the heat pump system is switched between the first and second configuration by a first and a second valve, said first valve is arranged to direct the working medium from the compressor to either the first or the second condenser, and the second valve is arranged to direct the working medium either from the first or second condenser to the evaporator. This embodiment provides a heat pump system that could be switched between the two configurations quick and easy.

In one embodiment of the dishwasher, the first and second valve is controlled by a control unit arranged in the dishwasher to control the operation of the dishwasher and the selected dishwasher program. This embodiment of the dishwasher is favourable since the control unit controls all functions of the dishwasher which ensures a reliable operation of the heat pump system as well as the selected program. According to the invention the dishwasher furthermore comprises a first passage leading ambient air from the exterior of the dishwasher past the evaporator during operation according to the first configuration. The passage increases the efficient of the heat pump system since the ambient air is directed by the passage past the evaporator which increases the cooling of the ambient air by working medium. According to the invention the dishwasher furthermore comprises a fan to generate a flow or air through the first passage past the evaporator arranged at least partly in the first passage to further improve the cooling of the ambient air flowing through the passage. According to the invention the dishwasher further comprising a second passage arranged to lead humid air from the washing chamber past the evaporator during operation in the second configuration to condensate the humid air and dehumidify the air before it is returned to the washing chamber. This embodiment increases the efficiency of the drying phase since the humidity of the air from the washing chamber is reduced considerably when steam is condensated by use of the evaporator that cools a surface arranged in, or adjacent to, the flow or air through the second passage. According to the invention the first and the second passage have a common section in which the evaporator and fan are arranged. This embodiment is very favourable for several reasons. First the fan and evaporator could be used in both configurations which simplifies the dishwasher considerably and thereby reduces the manufacturing cost. Secondly, the common section saves space within the dishwasher which makes it possible to increase the dimensions of the washing chamber. According to the invention the first and second passage are opened or closed by a first and a second valves controlled by the control unit corresponding to the selected configuration. The valve ensures that the desired flow of ambient air in the first configuration and air from the washing chamber during the second configuration.

In one embodiment of the dishwasher, the first air passage valve is arranged in the upstream end of the common section and the second air passage valve is arranged in the downstream end of the common section to provide a space efficient arrangement that could be controlled in an easy way.

In one embodiment of the dishwasher, the first and second valves are flap valves. Flap valve provides a quick and reliable opening and closing of the respective passage.

The different embodiment described above could of course be combined and modified in different ways without departing from the scope of the invention as claimed in claims 1 to 4, that will be described more in detail in the detailed description.

### Brief description of the drawings

The dishwasher according to the invention is schematically illustrated in the appended figures. The figures illustrate:
Figure 1 illustrates schematically an example of a prior art heat pump system.
Figure 2 discloses the dishwasher according to the invention in the first configuration schematically.
Figure 3 discloses the dishwasher according to the invention in the second configuration schematically.

### Detailed description

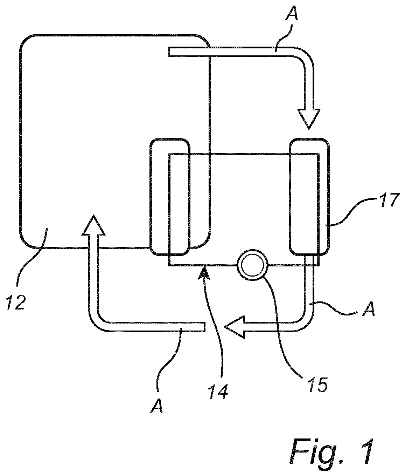

In figure 1, a known heating system for use in dishwasher is illustrated schematically. Figure 1 discloses a dishing chamber 12 intended to be arranged in a dishwasher and a basic heat pump system 14 comprising a compressor 15, a condenser 16 and an evaporator 17 connected with suitable pipes 18 to form the closed heat pump system in which a working medium is circulated.

After having passed the compressor 15, the working medium is lead to the condenser 16 where heat is transferred from the working medium to the dishing water in for example a heat exchanger, not illustrated, to be heated to the desired temperature to obtain a good dishing result. The working medium continues from the condenser 16 to the evaporator 17 where some kind of medium is cooled down, possibly to a solid state.

After the dishing phase of the dishing program is completed, the air in the washing chamber 12 is hot and containing a high amount of water steam. In order to be able dry the dishing goods in the washing chamber the amount of water steam in the air must be reduced. This is achieved by leading air, indicated with arrows A in figure 1, from the washing chamber 12 past the evaporator arranged outside the washing chamber 12 thereby condensating the water steam in the air and return the dried air to the washing chamber. However, the temperature of air is after the passing of the evaporator reduced considerably and affecting the drying in a negative way. If the drying phase is long, the temperature will be reduced further increasing the problem even more.

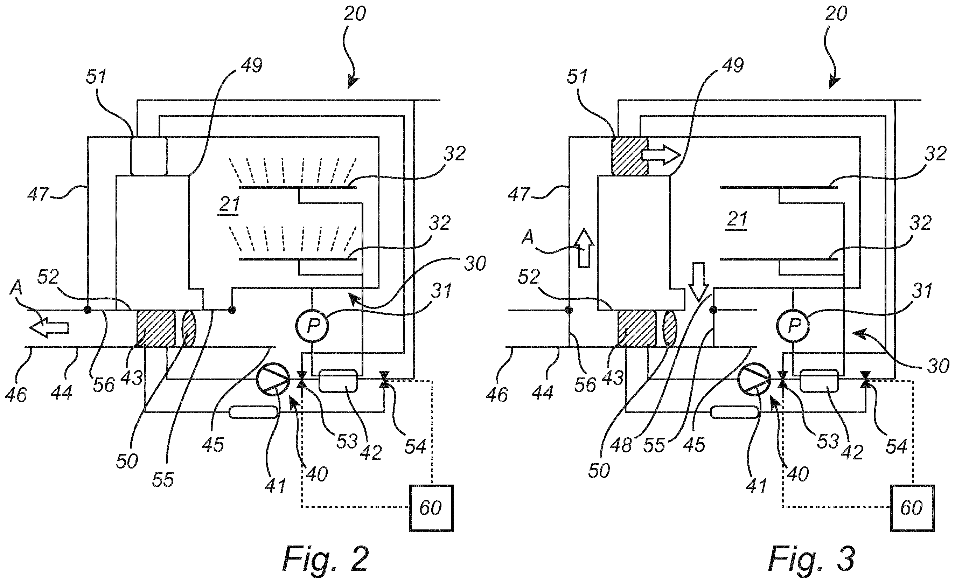

Figure 2 and 3 schematically illustrates selected components relating to the first and the second configuration of one embodiment of a dishwasher 20 according to the invention. The dishwasher 20 comprises a washing chamber 21 surrounded by a substantially rectangular cabinet, not illustrated in the figures. An opening is arranged in the front side of the dishwasher to make the washing chamber accessible from the outside. The opening is closed by a door.

Within the washing chamber 21 an upper and a lower basket for dishing goods are arranged at different heights. The baskets are extractably arranged in the washing chamber and formed of thin elements like for example wires or rods in order to provide a basket structure that the water could flow through easily. However, smaller dishwashers normally only have one basket while larger dishwashers could have three baskets.

Once the dishwasher is filled with dishing goods, the dishwasher is started. Dishwashers are provided with a number of different dishing programs adapted for different types of dishing goods etc. Most of the programs are started with a dishing phase followed by a drying phase and when the selected program is started heated water, in combination with detergent, is circulated in the washing chamber by a water circulating system 30 comprising at least a water pump 31 connected to at least one rotating spray arm 32 arranged in the washing chamber to spray water on the dishing goods in the baskets.

In order to achieve a satisfying dishing and drying result in combination with a low power consumption the dishwasher comprises a heat pump system 40 arranged to heat the cold water supplied to the dishwasher from an external provider via a pipe, not illustrated in the figures, and deliver heat to the dishwasher also during the drying phase.

The heat pump system 40 is switchable between a first configuration, figure 2, used during the dishing phase, and a second configuration used during the drying phase, figure 3. Within the heat pump system 40, a working medium is circulated between the different components of the system in pipes suitable for the selected working medium of the heat pump system.

In the first configuration, a compressor 41, arranged somewhere in the dishwasher 20, is connected to a first condenser 42, arranged to heat the dishing water, and an evaporator 43 arranged to cool ambient air from the exterior of the dishwasher. The first condenser 42 is arranged adjacent to the lower part of the washing chamber alternatively arranged along the pipe feeding the spray system to transfer heat from the working medium to the washing bath.

The working medium, now at a considerably lower temperature, continues from the first condenser 42 to an evaporator 43 arranged in a first passage 44 where the working medium cools ambient air lead from the exterior of the dishwasher via the first passage 44 past the evaporator 43, or a surface cooled by the evaporator, before the working medium is returned to the compressor 41 and the heat pump cycle is repeted until the dishing phase is ended.

The first passage 44 comprises an inlet opening 45 and an outlet opening 46 arranged in opposite ends of the first passage 44. The length of the first passage 44 could be adapted to the desired position of the inlet opening 45 and the outlet opening 46. The inlet opening and the outlet opening could be arranged in the dishwasher cabinet, or the length of the first passage increased to move the inlet opening and / or outlet opening to an offset position in the kitchen or another room of the building structure. This is favourable since the air cooled by the evaporator could be distributed to other rooms or areas of the building structure than the kitchen. In order to provide the desired flow of air through the first passage the diameter of the first passage preferably is at least 50mm. However, the cross sectional shape of the first passage could be rectangular, oval etc but preferably has a cross sectional area corresponding to a circular cross section with diameter of at least 50 mm.

In the second configuration, used during the dishwasher drying phase and illustrated in figure 3, the evaporator 43 is used to dehumidify the air in the washing chamber that after the completion of the dishing phase contains a high amount of humidity.

This is achieve by letting the humid air from the washing chamber pass the evaporator 43, or the surface cooled by the evaporator, to condensate the steam in the air to water and reduce the amount of steam in the air. The condensated water is led down into the sump in the lower part of the washing chamber.

In order to ensure an efficient dehumidifying of the humid air from the washing chamber, the dishwasher comprises a second passage 47 extending outside the washing chamber within the dishwasher cabinet. The second passage 47 has a first opening 48 open towards the washing chamber as well as a second opening 49 open towards the washing chamber to circulate the humid air from the washing chamber through the second passage 47. A fan 50 is arranged in the second passage 47 to generate a flow of air, illustrated with arrows A, through the second passage 47 and lead the air past the evaporator 43, or surface cooled by the evaporator, so that steam from the humid air is condensated to water and the air dehumidified before it returns to the washing chamber.

In order to increase the temperature of the air returned to the washing chamber which is essential for an efficient drying of the dishing goods the dehumidified air is heated by a second condenser 51 arranged adjacent to the second passage 47, alternatively in the second passage 47, to exchange heat from the working medium to the dehumidified air flowing through the second passage 47 before it is returned to the washing chamber.

In order to the reduce the overall size as well as the number of components in the dishwasher without affecting the efficiency of the heat pump system the first 44 and second passage 47 share a section 52 of the first and second passage where the fan 50 and the evaporator 43 are arranged. This means that the fan 50 also could be used to provide the desired flow of ambient air through the first passage 44 in the first configuration of the heat pump system.

The heat pump system is switched between the first and second configuration by a first 53 and a second valve 54 that are used to change the flow of the working medium within the heat pump system. The first valve 53 is arranged to lead the working medium from the compressor 41 to the first 42 or the second condenser 51, and the second valve 54 is arranged to lead the working medium either from the first 42 or second condenser 51 to the evaporator 43. The valves 53, 54 are operated by a dishwasher control unit 60 that is also running the operation of the dishwasher program based on the operator's selection.

At the same time as the first 53 and second valve 54 are switched from one configuration to the other, a first 55 and a second air passage valve 56 are switched from one configuration to the other. The first 55 and second air passage valve 56 is arranged in opposite ends of the common section 52 shared by the first 44 and second passage 47 to open the first passage 44 when the heat pump system 40 is in the first configuration, and the second passage 47 when the heat pump system 40 is in the second configuration.

The first air passage valve 55 is arranged upstream of the fan 50 and the evaporator 43 to either open the first passage 44 and close the second passage 47, i.e. first configuration, or close the first passage 44 and open the second passage 47, i.e. second configuration. The second air passage valve 56 is arranged downstream of the fan 50 and the evaporator 43 to either open the first passage 44 and close the second passage 47, i.e. first configuration, or close the first passage 44 and open the second passage 47, i.e. second configuration. The air passage valves 55, 56 are activated and controlled by the control unit 60.

The embodiments described above could be combined and modified in different ways without departing from the scope of the invention that is defined by the appended claims.

## Claims

1. Dishwasher (20) comprising:
a washing chamber in which dishing goods are packed in one or more baskets;
a water circulation system (30);
a heat pump system (40) comprising a compressor (41), a first condenser (42), a second condenser (51) and an evaporator (43) connected by pipes suitable for a working medium circulating in the heat pump system, said heat pump system is switchable between a first configuration, used during a dishing phase, in which the compressor (41) is connected to the first condenser (42) arranged to heat the dishing water and the evaporator (43) arranged to cool ambient air from the exterior of the washing chamber, **characterized by** a second configuration, used during a drying phase, in which the evaporator (43) is arranged to cool humid air from the washing chamber to condensate water from the air and the compressor (41) is connected to the second condenser (51) arranged to heat the dehumidified air, wherein a first (53) and a second valve (54) are arranged to switch the heat pump system (40) between the first and second configuration , said first valve (53) is arranged to direct the working medium from the compressor (41) to either the first (42) or the second condenser (51), and the second valve (54) is arranged to direct the working medium either from the first (42) or second condenser (51) to the evaporator (43), said dishwasher furthermore comprising a first passage (44) leading ambient air from the exterior of the washing chamber past the evaporator (43) during operation according to the first configuration, a fan (50) arranged to generate a flow or air through the first passage (44) past the evaporator (43) arranged at least partly in the first passage (44), and a second passage (47) arranged to lead humid air from the washing chamber past the evaporator (43) during operation in the second configuration to condensate the humid air and dehumidify the air before it is returned to the washing chamber wherein the first (44) and the second passage (47) extend through a common section (52) in which the evaporator (43) and fan (50) are arranged, and a first (55) and a second air passage valves (56) are arranged to open and /or close the first passage (44) and the second passage (47), whereby the air passage valves (55, 56) are controlled by a control unit (60).

2. Dishwasher according to claim 1, wherein the first (53) and second valve (54) is controlled by a control unit (60) arranged in the dishwasher to control the operation of the dishwasher and the selected dishwasher program.

3. Dishwasher according to claim 1, wherein the first air passage valve (55) is arranged in the upstream end of the common section and the second air passage valve (56) is arranged in the downstream end of the common section (52).

4. Dishwasher according to claim 1 or 3, wherein the first (55) and second air passage valves (56) are flap valves.

## Patentansprüche

1. Geschirrspülmaschine (20), umfassend:
eine Waschkammer, in der Geschirrwaren in einen oder mehrere Körbe gepackt werden;
ein Wasserzirkulationssystem (30);
ein Wärmepumpensystem (40), umfassend einen Kompressor (41), einen ersten Kondensator (42), einen zweiten Kondensator (51) und einen Verdampfer (43), die durch Rohre verbunden sind, die sich für ein Arbeitsmedium eignen, das in dem Wärmepumpensystem zirkuliert, wobei das Wärmepumpensystem zwischen einer ersten Konfiguration, die während einer Geschirrspülphase verwendet wird, in welcher der Kompressor (41) mit dem ersten Kondensator (42) verbunden ist, der zum Erwärmen des Geschirrspülwassers angeordnet ist, und dem Verdampfer (43), der zum Kühlen von Umgebungsluft von der Außenseite der Waschkammer angeordnet ist, umschaltbar ist, **gekennzeichnet durch** eine
zweite Konfiguration, die während einer Trocknungsphase verwendet wird, wobei der Verdampfer (43) zum Kühlen von feuchter Luft aus der Waschkammer zum Kondensieren von Wasser aus der Luft angeordnet ist, und wobei der Kompressor (41) mit dem zweiten Kondensator (51) verbunden ist, der zum Erwärmen der entfeuchteten Luft angeordnet ist, wobei ein erstes (53) und ein zweites Ventil (54) angeordnet sind, um das Wärmepumpensystem (40) zwischen der ersten und der zweiten Konfiguration zu zu schalten, wobei das erste Ventil (53) angeordnet ist, um das Arbeitsmedium vom Kompressor (41) entweder zum ersten (42) oder zweiten Kondensator (51) zu leiten, und wobei das zweite Ventil (54) angeordnet ist, um das Arbeitsmedium entweder vom ersten (42) oder zweiten Kondensator (51) zum Verdampfer (43) zu leiten, wobei die Geschirrspülmaschine des Weiteren einen ersten Durchgang (44) umfasst, der gemäß einer ersten Konfiguration während des Betriebs Umgebungsluft von der Außenseite der Waschkammer bis hinter den Verdampfer (43) führt, wobei ein Gebläse (50) zum Erzeugen eines Luftstroms durch den ersten Durchgang (44) hinter dem Verdampfer (43) angeordnet ist, der mindestens zum Teil im ersten Durchgang (44) angeordnet ist, und wobei während des Betriebs in der zweiten Konfiguration ein zweiter Durchgang (47) zum Führen von feuchter Luft aus der Waschkammer hinter den Verdampfer (43) angeordnet ist, um die feuchte Luft zu kondensieren und die Luft vor Rückleiten davon zur Waschkammer zu entfeuchten, wobei sich der erste (44) und der zweite Durchgang (47) durch einen gemeinsamen Abschnitt (52) erstrecken, in dem der Verdampfer (43) und das Gebläse (50) angeordnet sind, und wobei ein erstes (55) und ein zweites Luftdurchgangsventil (56) angeordnet sind, um den ersten Durchgang (44) und den zweiten Durchgang (47) zu öffnen und/oder zu schließen, wodurch die Luftdurchgangsventile (55, 56) durch eine Steuereinheit (60) gesteuert werden.

2. Geschirrspülmaschine nach Anspruch 1, wobei das erste (53) und das zweite Ventil (54) durch eine Steuereinheit (60) gesteuert werden, die in der Geschirrspülmaschine angeordnet ist, um den Betrieb der Geschirrspülmaschine und des ausgewählten Geschirrspülprogramms zu steuern.

3. Geschirrspülmaschine nach Anspruch 1, wobei das erste Luftdurchgangsventil (55) dem Ende des gemeinsamen Abschnitts vorgeschaltet ist und das zweite Luftdurchgangsventil (56) dem Ende des gemeinsamen Abschnitts (52) nachgeschaltet ist.

4. Geschirrspülmaschine nach Anspruch 1 oder 3, wobei das erste (55) und das zweite Luftdurchgangsventil (56) Klappenventile sind.

## Revendications

1. Lave-vaisselle (20), comprenant:
une chambre de lavage dans laquelle des articles de vaisselle sont disposés dans un ou plusieurs paniers;
un système de circulation d'eau (30);
un système de pompe à chaleur (40) comprenant un compresseur (41), un premier condenseur (42), un second condenseur (51) et un évaporateur (43) connecté par des tuyaux appropriés pour faire circuler un fluide de travail dans le système de pompe à chaleur, ledit système de pompe à chaleur peut être commuté entre une première configuration, utilisée pendant une phase de lavage, dans laquelle le compresseur (41) est connecté au premier condenseur (42) agencé de manière à chauffer l'eau de lavage et à l'évaporateur (43) agencé de manière à refroidir l'air ambiant en provenance de l'extérieur de la chambre de lavage, **caractérisé par** une seconde configuration, utilisée pendant une phase de séchage, dans laquelle l'évaporateur (43) est agencé de manière à refroidir l'air humide en provenance de la chambre de lavage afin de condenser l'eau provenant de l'air et le compresseur (41) est connecté au second condenseur (51) agencé de manière à chauffer l'air déshumidifié, dans lequel une première (53) et une seconde (54) soupapes sont agencées de manière à commuter le système de pompe à chaleur (40) entre les première et seconde configurations, ladite première soupape (53) est agencée de manière à diriger le fluide de travail à partir du compresseur (41) soit vers le premier (42) soit vers le second (51) condenseur, et la seconde soupape (54) est agencée de manière à diriger le fluide de travail soit à partir du premier (42) soit à partir du second (51) condenseur vers l'évaporateur (43), ledit lave-vaisselle comprenant en outre un premier passage (44) pour conduire l'air ambiant depuis l'extérieur de la chambre de lavage au-delà de l'évaporateur (43) pendant le fonctionnement selon la première configuration, un ventilateur (50) agencé de manière à générer un écoulement d'air à travers le premier passage (44) au-delà de l'évaporateur (43) agencé au moins partiellement dans le premier passage (44), et un second passage (47) agencé de manière à conduire l'air humide à partir de la chambre de lavage au-delà de l'évaporateur (43) pendant le fonctionnement dans la seconde configuration afin de condenser l'air humide et de déshumidifier l'air avant qu'il soit renvoyé vers la chambre de lavage, dans lequel le premier (44) et le second (47) passages s'étendent à travers une section commune (52) dans laquelle l'évaporateur (43) et le ventilateur (50) sont agencés, et une première (55) et une seconde (56) soupapes de passage d'air sont agencées de manière à ouvrir et/ou à fermer le premier passage (44) et le second passage (47), dans lequel les soupapes de passage d'air (55, 56) sont commandées par une unité de commande (60).

2. Lave-vaisselle selon la revendication 1, dans lequel les première (53) et seconde (54) soupapes sont commandées par une unité de commande (60) qui est agencée dans le lave-vaisselle de manière à commander le fonctionnement du lave-vaisselle ainsi que le programme de lave-vaisselle sélectionné.

3. Lave-vaisselle selon la revendication 1, dans lequel la première soupape de passage d'air (55) est agencée dans l'extrémité amont de la section commune, et la seconde soupape de passage d'air (56) est agencée dans l'extrémité aval de la section commune (52).

4. Lave-vaisselle selon la revendication 1 ou 3, dans lequel les première (55) et seconde (56) soupapes de passage d'air sont des soupapes à clapet.
